# DEMANDE DE BREVET EUROPEEN

(11) **EP 4 287 602 A1**
(43) Date de publication de la demande: **06.12.2023**
(21) Numéro de dépôt: 23175957.2
(22) Date de dépôt: 30.05.2023
(51) Int. Cl.: H04M 3/56

(54) **PROCÉDÉ DE FOURNITURE DE DONNÉES AUDIO, DISPOSITIF, SYSTÈME, ET PROGRAMME D'ORDINATEUR ASSOCIÉS**

(30) Priorité: 31.05.2022 FR 2205218
(71) Demandeur: Orange, 92130 Issy-les-Moulineaux (FR)
(72) Inventeur: GUIONNET, Chantal, 92326 CHATILLON CEDEX (FR); LEDUBY, Jean-Bernard, 92326 CHATILLON CEDEX (FR)
(74) Mandataire: Cabinet Beau de Loménie

(57) **Abrégé**

La présente invention concerne un procédé de fourniture de données audio de visioconférence, un dispositif (APP), un système (SYS), et un programme d'ordinateur associés. Le procédé proposé comprend une génération (S40) de deuxièmes données audio (SYN_AUDIO) représentatives d'au moins une activité (ACT) détectée en fonction de données mesurées (IN_DATA) par au moins un capteur non-audio (SENS), lesdites deuxièmes données audio générées (SYN_AUDIO) étant aptes à être mélangées avec des premières données audio captées (IN_AUDIO).

## Description

### Domaine technique

La présente invention se rapporte aux domaines de l'acquisition, du traitement et de la restitution de données audio. En particulier, la présente invention concerne un procédé de fourniture de données audio, ainsi qu'un dispositif, un système, un programme d'ordinateur et un support d'information associés. La présente invention trouve une application particulièrement avantageuse, bien que nullement limitative, pour la mise en oeuvre de systèmes de visioconférence, par exemple pour équiper des salles de réunion.

### État de la technique antérieure

De façon connue, un service de visioconférence est un service assurant la transmission en temps réel de signaux de parole (i.e. flux audio) et d'images vidéos (i.e. flux vidéo) d'interlocuteurs se trouvant dans deux emplacements différents (i.e. communication point-à-point) ou plus (i.e. communication point-à-multipoint). Dans un contexte professionnel, les services de visioconférences s'appuient classiquement sur l'utilisation de salles de visioconférence dédiées, spécialement équipées à cet effet.

Les services de visioconférence présentent de nombreux avantages pour les entreprises et pour les particuliers. Ils offrent une alternative intéressante aux réunions en présentiel notamment en termes de coûts et de temps, en permettant de limiter les déplacements physiques des participants. Ces avantages sont néanmoins contrebalancés par un certain nombre d'inconvénients.

Notamment, les solutions existantes de visioconférence ne sont pas pleinement satisfaisantes sur le plan de l'accessibilité numérique. Les utilisateurs des services de visioconférence existants rencontrent plus ou moins de difficultés à suivre une réunion à distance en fonction de leurs langues, de leurs aptitudes, de leurs matériels informatiques et, plus généralement, de leurs ressources numériques. En effet, les systèmes de visioconférence existants exigent nécessairement une restitution multimodale, avec un flux vidéo et un flux audio, pour permettre aux utilisateurs d'avoir une bonne compréhension d'une réunion. À titre d'exemple, lorsque le flux vidéo retransmis lors d'une visioconférence correspond aux diapositives d'une présentation, les utilisateurs distants peuvent rencontrer des difficultés à suivre les différentes interventions des interlocuteurs ou à comprendre une conversation entre plusieurs personnes.

Il existe par conséquent un besoin d'une solution permettant de restituer de manière plus complète et plus accessible le déroulement d'une réunion en visioconférence, et permettant ainsi d'améliorer l'expérience des utilisateurs d'un système de visioconférence.

### Exposé de l'invention

La présente invention a pour objectif de remédier à tout ou partie des inconvénients de l'art antérieur, notamment ceux exposés précédemment.

À cet effet, selon un aspect de l'invention, il est proposé un procédé de fourniture de données audio, ledit procédé comprenant une génération audio, la génération audio créant des deuxièmes données audio représentatives d'au moins une activité détectée, ladite au moins une activité étant détectée en fonction de données mesurées par au moins un capteur non-audio, les deuxièmes données audio générées étant aptes à être mélangées avec des premières données audio captées.

Le procédé proposé permet d'améliorer la restitution d'une réunion ou d'une présentation et également d'améliorer l'accessibilité numérique aux services de visioconférence. Plus particulièrement, le procédé proposé permet de décrire par la seule modalité audio des activités détectées lors d'une réunion ou d'une présentation, ces activités étant normalement accessibles par plusieurs modalités, notamment les modalités audio et vidéo.

Selon un mode de réalisation, le procédé comprend une capture des données mesurées par ledit au moins un capteur en fonction desquelles ladite au moins une activité est détectée.

Ce mode de réalisation permet d'obtenir les données mesurées nécessaires à la détection des activités associées à une réunion ou une présentation. En adaptant le mode de capture des données mesurées, ce mode de réalisation permet d'adapter la détection des activités associées à une réunion ou une présentation en fonction de différents scénarios.

Selon un mode de réalisation, les deuxièmes données audio comprennent au moins un message audio en voix de synthèse.

Ce mode de réalisation permet de décrire les activités détectées aux utilisateurs par le biais de signaux de parole et donc de décrire ces activités de manière plus explicite.

Selon un mode de réalisation, le procédé comprend un mélange des premières données audio et des deuxièmes données audio.

Ce mode de réalisation permet de combiner, dans un unique canal audio, les premières données audio captées associées à une réunion ou à une présentation et les deuxièmes données audio représentatives des activités détectées liées à cette réunion ou présentation.

Plus précisément, ce mode de réalisation permet d'enrichir un contenu audio (e.g. les sons captés par les microphones d'une salle) associé à une réunion ou une présentation avec des données audio représentatives des activités détectées lors de cette réunion ou présentation.

Selon un mode de réalisation, le mélange des premières et deuxièmes données audio est réalisé de manière synchrone.

Ce mode de réalisation permet de synchroniser les données audio d'activités (i.e. deuxièmes données audio) avec les données audio de base (i.e. premières données audio). En réalisant le mélange de manière synchrone, lorsque les données audio enrichies (i.e. données audio mélangées) sont restituées à un utilisateur, ce dernier a accès de manière simultanée aux données audio de base et aux données audio d'activités, ce qui améliore la restitution d'une réunion par la modalité audio.

Selon un mode de réalisation, la génération de deuxièmes données audio représentatives d'une dite activité est immédiatement consécutive à la détection de cette activité et le mélange de premières données audio et de ces deuxièmes données audio est immédiatement consécutif à la génération de ces deuxièmes données audio.

Ce mode de réalisation permet à un utilisateur de recevoir en direct des données audio enrichies avec des données d'activités.

Selon un mode de réalisation, les données audio mélangées comprennent plusieurs canaux audio.

Ce mode de réalisation permet de fournir différentes versions d'un contenu audio associé à une réunion ou une présentation.

Selon un mode de réalisation, la génération des deuxièmes données audio est réalisée en fonction d'au moins un paramètre utilisateur d'un utilisateur d'un dispositif de restitution destinataire des données audio mélangées.

Ce mode de réalisation est particulièrement avantageux dans la mesure où il permet d'adapter le contenu audio enrichi en fonction du destinataire.

De fait, ce mode de réalisation permet en outre d'améliorer l'accessibilité numérique des systèmes de visioconférence. En effet, le flux audio lors d'une visioconférence est enrichi avec des données d'activités adaptées en fonction des destinataires, ce qui permet d'améliorer l'expérience des utilisateurs d'un système de visioconférence.

Selon un mode de réalisation, lesdits plusieurs canaux audio sont respectivement obtenus à partir de différents paramètres utilisateur.

Ce mode de réalisation permet d'adapter la restitution d'une réunion ou d'une présentation à des utilisateurs avec des paramètres utilisateurs différents, ce qui contribue à améliorer l'expérience des utilisateurs.

Selon un mode de réalisation, le procédé comprend une identification d'au moins une personne associée à ladite au moins une activité détectée, lesdites deuxièmes données audio étant générées en fonction du résultat de l'identification.

Selon ce mode de réalisation, le procédé proposé permet de détecter les activités des personnes participant à une réunion ou à une présentation et permet en outre d'identifier ces personnes. Les données audio d'activités sont selon ce mode de réalisation obtenues en fonction de l'identification des personnes.

En identifiant les personnes associées aux activités décrites par les données audio d'activités, ce mode de réalisation permet de restituer par la modalité audio une réunion ou une présentation de manière plus complète (i.e. avec un niveau d'informations plus important).

Selon un autre aspect de l'invention, il est proposé un dispositif de fourniture de données audio, ledit dispositif comprenant un générateur audio, le générateur audio créant des deuxièmes données audio représentatives d'au moins une activité détectée, ladite au moins une activité étant détectée en fonction de données mesurées par au moins un capteur non-audio, lesdites deuxièmes données audio générées étant aptes à être mélangées avec des premières données audio captées.

Les caractéristiques et avantages du procédé conforme à la présente invention décrit ci-dessus s'appliquent également au dispositif proposé et vice versa.

Selon un aspect de l'invention il est proposé un système comprenant :
- un dispositif de fourniture de données audio conforme à l'invention ; et
- au moins un dispositif d'acquisition configuré pour capter des premières données audio et pour communiquer avec ledit dispositif de fourniture de données audio ; et
- au moins un capteur configuré pour capturer des données mesurées et pour communiquer avec ledit dispositif de fourniture de données audio.

Les caractéristiques et avantages du procédé conforme à la présente invention décrit ci-dessus s'appliquent également au système proposé et vice versa.

Selon un mode de réalisation, le système comprend au moins un dispositif de restitution configuré pour communiquer avec ledit dispositif de fourniture de données audio et pour restituer des données audio.

Selon un mode de réalisation, ledit au moins un capteur est un capteur parmi les suivants : une caméra ; une sonde réseau ; un capteur de pression ; un capteur de température ; un capteur de profondeur ; et une caméra thermique.

Selon un mode réalisation, le système proposé est un système de visioconférence. En particulier, selon ce mode de réalisation, le système proposé met en oeuvre un service (i.e. une fonction) de visioconférence.

Selon un aspect de l'invention, il est proposé un programme d'ordinateur comportant des instructions pour la mise en oeuvre des étapes d'un procédé conforme à l'invention, lorsque le programme d'ordinateur est exécuté par au moins un processeur ou un ordinateur.

Le programme d'ordinateur peut être formé d'une ou plusieurs sous-parties stockées dans une même mémoire ou dans des mémoires distinctes. Le programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Selon un aspect de l'invention, il est proposé un support d'informations lisible par ordinateur comprenant un programme d'ordinateur conforme à l'invention.

Le support d'informations peut être n'importe quelle entité ou dispositif capable de stocker le programme. Par exemple, le support peut comporter un moyen de stockage, tel qu'une mémoire non-volatile ou ROM, par exemple un CD-ROM ou une ROM de circuit microélectronique, ou encore un moyen d'enregistrement magnétique, par exemple une disquette ou un disque dur. D'autre part, le support de stockage peut être un support transmissible tel qu'un signal électrique ou optique, qui peut être acheminé via un câble électrique ou optique, par radio ou par un réseau de télécommunication ou par un réseau informatique ou par d'autres moyens. Le programme selon l'invention peut être en particulier téléchargé sur un réseau informatique. Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description fournie ci-après de modes de réalisation de l'invention. Ces modes de réalisation sont donnés à titre illustratif et sont dépourvus de tout caractère limitatif. La description fournie ci-après est illustrée par les dessins ci-joints :
[Fig. 1] La figure 1 représente schématiquement un système de fourniture de données audio selon un mode de réalisation de l'invention ;
[Fig. 2] La figure 2 représente, sous forme d'ordinogramme, des étapes d'un procédé de fourniture de données audio selon un mode de réalisation de l'invention ;
[Fig. 3] La figure 3 représente schématiquement un exemple de données obtenues et traitées par un système de fourniture de données audio selon un mode de réalisation de l'invention ;
[Fig. 4A]-[Fig. 4D] Les figures 4A à 4D représentent schématiquement un système de fourniture de données audio selon des modes de réalisation de l'invention ;
[Fig. 5] La figure 5 représente schématiquement un système de fourniture de données audio selon un mode de réalisation de l'invention;
[Fig. 6] La figure 6 représente schématiquement un exemple d'architecture logicielle et matérielle d'un dispositif de fourniture de données audio selon un mode de réalisation de l'invention ;
[Fig. 7] La figure 7 représente schématiquement un exemple d'architecture fonctionnelle d'un dispositif de fourniture de données audio selon un mode de réalisation de l'invention.

### Description des modes de réalisation

La présente invention concerne un procédé de fourniture de données audio, un dispositif, un système, un programme d'ordinateur et un support d'informations associés.

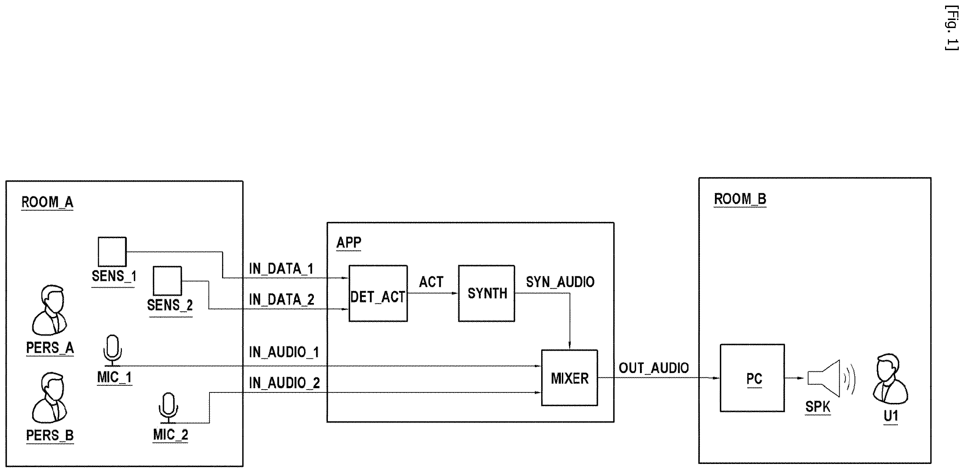

La **figure 1** représente schématiquement un système de fourniture de données audio selon un mode de réalisation de l'invention.

En particulier, la figure 1 illustre un exemple de mise en oeuvre dans lequel le système proposé de fourniture de données audio conforme à l'invention est exploité pour mettre en oeuvre un service de visioconférence. Cet exemple de mise en oeuvre est décrit à titre illustratif et est dépourvu de tout caractère limitatif.

Le système proposé selon ce mode de réalisation comprend : des capteurs SENS_1 et SENS_2 ; des dispositifs MIC_1 et MIC_2 d'acquisition de données audio; un dispositif APP de fourniture de données audio ; et un dispositif PC de restitution de données audio.

Dans cet exemple, nous considérons que les capteurs SENS_1 et SENS_2 et les dispositifs MIC_1 et MIC_2 équipent une salle de réunion ROOM_A. Dans cette salle de réunion ROOM_A, plusieurs personnes PERS_A et PERS_B sont présentes et participent à une réunion en visioconférence. Aussi, lors de la réunion, les dispositifs MIC_1 et MIC_2 captent des premières données audio IN_AUDIO_1 et IN_AUDIO_2 et les capteurs SENS_1 et SENS_2 capturent des données mesurées IN_DATA_1 et IN_DATA 2. Nous supposons dans cet exemple que les capteurs SENS_1 et SENS_2 sont des caméras filmant la salle de réunion ROOM_A et que les dispositifs MIC_1 et MIC_2 sont des terminaux équipés de microphones captant les voix des personnes PERS_A et PERS_B.

Selon cet exemple, le dispositif APP prend en entrée les premières données audio IN_AUDIO_1 et IN_AUDIO_2 ainsi que les données mesurées IN_DATA_1 et IN_DATA_2.

Au moyen d'un détecteur DET_ACT, le dispositif APP détecte, à partir des données mesurées IN_DATA_1 et IN_DATA_2, les activités ACT des personnes PERS_A et PERS_B durant la visioconférence ainsi que les activités ACT associées à la salle de réunion ROOM_A. À titre illustratif, le dispositif APP détecte à partir d'images produites par les caméras SENS_1 et SENS_2 que la personne PERS_A se lève, se rapproche d'un tableau et débute une présentation. Ainsi, le dispositif détecte une activité par exemple caractérisée par l'attribut de description suivant : « Une présentation débute. ». Selon un autre exemple, le dispositif APP détecte à partir de données mesurées IN_DATA capturées par un capteur de pression SENS qu'une porte de la salle de réunion ROOM_A s'est ouverte, une telle activité ACT étant par exemple caractérisée par l'attribut : « Une porte de la salle de réunion s'est ouverte ».

Au moyen d'un générateur SYNTH, le dispositif APP génère des deuxièmes données audio SYN_AUDIO représentatives des activités ACT détectées. Par exemple, les deuxièmes données audio SYN_AUDIO peuvent comprendre un message audio en voix de synthèse annonçant : « Une présentation débute. ».

Au moyen d'un mélangeur MIXER, le dispositif APP mélange (i.e. combine) les premières données audio IN_AUDIO_1 et IN_AUDIO_2 (i.e. les voix des personnes) et les deuxièmes données audio SYN_AUDIO (i.e. les données audio d'activités) pour produire des données audio mélangées OUT_AUDIO. Ainsi, les données audio mélangées OUT_AUDIO comprennent, selon cet exemple, un canal audio enrichi combinant les voix des personnes PERS_A et PERS_B avec les données audio d'activités SYN_AUDIO.

Dans cet exemple, le dispositif APP fournit des données audio enrichies OUT_AUDIO à un dispositif PC de restitution. Ce dispositif PC de restitution est situé dans une salle de réunion distante ROOM_B dans laquelle est présente un utilisateur U1. Le dispositif de restitution PC est, à titre d'illustration, un terminal équipé d'un haut-parleur SPK. Ainsi, lors de la réunion, le terminal PC reçoit en provenance du dispositif APP un flux audio OUT_AUDIO et le restitue avec le haut-parleur SPK.

Le dispositif APP permet ainsi d'enrichir un flux audio associé à une réunion avec des informations audio représentatives des activités détectées. Le déroulement de la réunion est donc restitué de manière plus complète et plus accessible aux utilisateurs. En effet, les données audio enrichies permettent de décrire, par la seule modalité audio, des informations normalement accessibles par plusieurs modalités, notamment audio et vidéo.

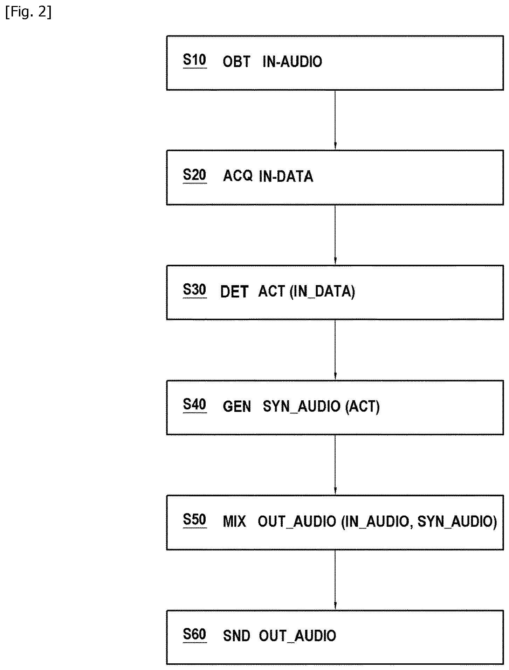

**La** **figure 2** représente, sous forme d'ordinogramme, des étapes d'un procédé de transmission de données audio selon un mode de réalisation de l'invention.

Selon un mode de réalisation illustré par la figure 2, le procédé proposé de fourniture de données audio est mis en oeuvre par le dispositif APP et comprend au moins une des étapes décrites ci-après.

Au cours d'une étape S10, le dispositif APP obtient des premières données audio IN_AUDIO.

Dans le contexte de l'invention, le terme « données audio » est utilisé pour désigner des données informatiques permettant de représenter un ou plusieurs canaux audio (i.e. flux audio, signaux acoustiques). Par la suite, nous faisons également référence aux premières données audio en utilisant l'expression « données audio de base ».

En particulier, selon une variante de réalisation, le dispositif APP capte des premières données audio IN_AUDIO en utilisant des dispositifs MIC d'acquisition de données audio configurés pour capter des données audio. De tels dispositifs MIC d'acquisition sont capables de convertir un signal acoustique en données audio, et correspondent par exemple à des terminaux comprenant un microphone ou étant configurés pour communiquer avec un microphone, etc. Typiquement, les premières données audio IN_AUDIO correspondent aux canaux audio (i.e. signaux audio) captés par un ou plusieurs microphones équipant une salle de visioconférence ROOM_A.

Dans le cadre de l'invention, il pourrait également être envisagé d'autres variantes de réalisation selon lesquelles le dispositif APP reçoit les premières données audio IN_AUDIO en provenance d'un dispositif de stockage mémorisant ces données.

Au cours d'une étape S20, le dispositif APP capture des données mesurées IN_DATA en utilisant au moins un capteur SENS.

Dans le contexte de l'invention, le terme « données mesurées » désigne des données produites par un ou plusieurs capteurs, ou produites à partir de mesures réalisées par un ou plusieurs capteurs. Plus particulièrement, les données mesurées sont des données non-audio permettant de détecter des activités de personnes ou de lieu. Typiquement, les données mesurées sont, par exemple, produites par des objets connectés (plus couramment désignés par le terme IoT, acronyme de l'expression anglaise « Internet of Things ») équipant une salle de visioconférence.

Ainsi, selon une variante de réalisation, le dispositif APP capture des données mesurées IN_DATA en utilisant les capteurs SENS. Au sens de l'invention, un « capteur » désigne un dispositif transformant l'état d'une grandeur physique en une grandeur utilisable (e.g. une tension électrique). Par exemple, les capteurs SENS peuvent appartenir à l'ensemble suivant de capteurs : une caméra ; une sonde réseau ; un capteur de pression ; un capteur de température ; un capteur de profondeur ; et une caméra thermique. À titre illustratif, les données mesurées IN_DATA peuvent comprendre une pluralité d'images acquises par une ou plusieurs caméras filmant une salle de réunion ROOM_A.

Selon d'autres variantes de réalisation, le dispositif APP reçoit les données mesurées IN_DATA en provenance d'un dispositif de stockage mémorisant ces données.

Au cours d'une étape S30, le dispositif APP détecte, à partir des données mesurées IN_DATA notamment au moyen d'un ou plusieurs capteurs SENS, au moins une activité ACT. Plus précisément, le dispositif APP analyse les données mesurées IN_DATA, capturées par au moins un capteur SENS, pour détecter les activités ACT.

Dans le contexte de l'invention, une activité ACT détectée est décrite par un attribut de description et un instant de détection. Une activité au sens de l'invention peut désigner une activité d'au moins une personne ou une activité d'au moins un lieu.

Une activité ACT détectée peut notamment être une activité locale, c'est-à-dire une activité particulière à un lieu ou à un groupe de personnes. Une telle activité locale peut ainsi désigner : une activité d'une ou plusieurs personnes dans un lieu (e.g. une prise de parole d'un des participants d'une visioconférence dans une salle de visioconférence) ; ou une activité de ce lieu (e.g. un lancement d'un diaporama dans la salle de visioconférence). Une « activité locale » peut également être désignée par le terme « évènement local ».

Par « activité de personnes », nous faisons ici référence à une action réalisée par au moins une personne. Une activité détectée par le dispositif APP peut par exemple appartenir à l'ensemble d'activités suivant : le début ou la fin d'une présentation par une personne ; une conversation entre personnes, une entrée ou une sortie d'une personne dans une pièce, un déplacement ou un mouvement d'une personne, une expression d'une personne (e.g. un sourire), etc. À titre d'exemple, le dispositif APP détecte, à partir d'images IN_DATA acquises par une caméra SENS, qu'une personne est entrée dans la salle de réunion ROOM_A. En outre, une ou plusieurs personnes peuvent être sujets ou compléments d'une activité détectée, e.g. une personne PERS_A désigne une autre personne PERS_B.

Par « activité de lieu », nous faisons ici référence à une activité associée à un lieu, et ainsi à tous changements dans le lieu non associés à une personne. Par exemple, une activité associée à un lieu peut par exemple appartenir à l'ensemble d'activités suivant : un début ou une fin de lecture d'un contenu multimédia (e.g. lancement d'un diaporama, démarrage d'une reproduction d'un film, etc.) ; une ouverture ou une fermeture d'une porte ; un allumage ou une extinction des lumières, etc. À titre illustratif, le dispositif APP détecte, à partir de données mesurées IN_DATA par un capteur SENS, qu'une lecture d'un contenu multimédia a débuté.

Les détails de mise en oeuvre de l'étape S30 de détection d'activités sont par exemple décrits dans les documents suivants : Florea et al., « Multimodal Deep Learning for Group Activity Recognition in Smart Office Environments », Future Internet, 2020 ; Krishnan et al., « Activity recognition on streaming sensor data », Pervasive and Mobile Computing, Volume 10, 2014.

En outre, le dispositif APP peut identifier des personnes associées à des activités détectées ACT. Une telle étape d'identification de personne peut notamment être mise en oeuvre en utilisant des techniques de reconnaissance vocale ou faciale, ou en exploitant une sonde réseau et l'identifiant d'un terminal associé à une personne, etc. Par exemple, le dispositif APP peut, à partir d'images IN_DATA acquises par une caméra SENS, détecter qu'une personne PERS_A est entrée dans la salle de réunion ROOM_A et identifier que cette personne PERS_A est Madame X. Selon un autre exemple, les premières données audio IN_AUDIO peuvent également être utilisées par le dispositif APP pour identifier une ou plusieurs personnes, notamment en utilisant des techniques de reconnaissance vocale.

Il convient de souligner que, dans le contexte de l'invention, l'identification des personnes peut être réalisée de manière nominative, mais il pourrait également être envisagé d'identifier les personnes de manière anonyme en leur attribuant respectivement des identifiants non-nominatifs.

Au cours d'une étape S40, le dispositif APP génère des deuxièmes données audio SYN_AUDIO représentatives de ladite au moins une activité ACT détectée.

Selon un mode de réalisation, l'étape S40 de génération des deuxièmes données audio SYN_AUDIO comporte une conversion (i.e. une transformation) en audio d'activités ACT détectées. Les deuxièmes données audio SYN_AUDIO sont ci-après également dites « données audio d'activités ».

Selon un mode de réalisation, les deuxièmes données audio SYN_AUDIO comprennent des icônes sonores associées aux activités détectées, les icônes sonores pouvant être enregistrées, générées par ordinateur, etc. Dans ce mode réalisation, le dispositif APP génère l'icône sonore correspondant à l'activité ACT détecté. À titre illustratif, suite à la détection de l'entrée de Madame X dans la salle de réunion ROOM_A, le dispositif APP génère une icône sonore associée, telle qu'une sonnerie de cloche.

Selon un mode de réalisation, le dispositif APP génère des messages audio en voix de synthèse représentatifs des activités ACT détectées. À titre d'exemple, le dispositif APP synthétise un signal de parole annonçant le message suivant : « Madame X est entrée dans la salle de réunion. ». Ainsi, selon ce mode de réalisation, les deuxièmes données audio SYN_AUDIO comprennent un ou plusieurs messages audio en voix de synthèse. Notamment, la synthèse d'un signal de parole peut être réalisée au moyen d'un programme d'ordinateur de type « Text-to-Speech ».

Par « message audio en voix de synthèse », il est fait référence ici à un ou plusieurs signaux de parole générés par ordinateur avec une voix de synthèse (i.e. synthèse vocale).

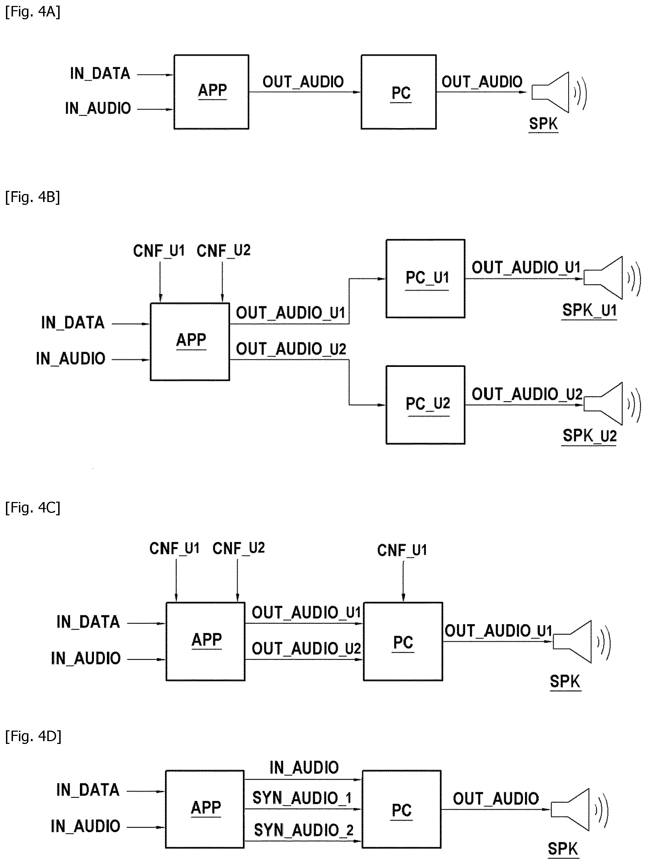

Notamment, l'étape S40 de génération des deuxièmes données audio SYN_AUDIO peut être paramétrée par un ou plusieurs paramètres utilisateur CNF_U1, CNF_U2. Par exemple, un paramètre utilisateur peut caractériser la langue de l'utilisateur (e.g. français ou anglais), de telle sorte que le signal de parole synthétisé SYN_AUDIO annonce un message dans cette langue. Un tel paramétrage de l'étape S40 est plus amplement décrit ci-après en référence aux figures 4A à 4D.

Au cours d'une étape S50, le dispositif APP mélange les premières données audio IN_AUDIO et les deuxièmes données audio SYN_AUDIO. De la sorte, le dispositif APP obtient des données audio mélangées OUT_AUDIO.

Le procédé proposé réalise à l'étape S50 une combinaison numérique de plusieurs canaux audio sources (les premières et les deuxièmes données audio) pour obtenir en sortie au moins un canal audio (les données audio mélangées). Ci-après, nous désignons également lesdites données audio mélangées obtenues par le procédé avec l'expression « données audio enrichies ». Cette expression renvoie au fait que les données audio de base sont enrichies par le procédé avec les données audio d'activités.

Par exemple, le dispositif APP combine à cette étape les premières données audio IN_AUDIO, correspondant à des sons captés dans la salle de réunion ROOM_A, avec les deuxièmes données audio SYN_AUDIO, correspondant à un message audio en voix de synthèse annonçant l'entrée de Madame X. Dans cet exemple, le dispositif APP fournit en sortie des données audio enrichies OUT_AUIO comprenant un canal audio combinant les voix des personnes participant à la réunion avec le message audio en voix de synthèse annonçant l'entrée d'une personne dans la salle de réunion ROOM_A.

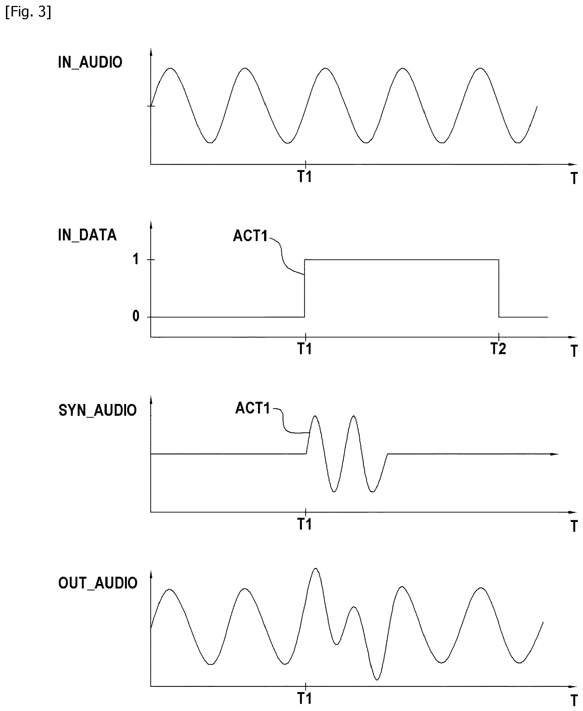

Il convient de noter que, selon un mode de réalisation décrit ci-après en référence à la figure 3, l'étape de mélange S50 est réalisée de manière synchrone.

Tel que décrit ci-après en référence aux figures 4A à 4D, l'étape de mélange S50 peut être paramétrée par un ou plusieurs paramètres utilisateurs.

Également en référence aux figures 4A à 4D, le dispositif APP peut à l'étape S50 effectuer une pluralité de mélanges en fonction de différents paramètres utilisateurs, de telle sorte que les données audio mélangées OUT_AUDIO comprennent une pluralité de canaux audio.

Dans le contexte de l'invention, par « canaux audio », il est fait référence ici à des flux audio correspondant respectivement à des signaux acoustiques distincts (i.e. un signal audio, ou une piste audio).

Selon un mode de réalisation, la génération de deuxièmes données audio représentatives d'une activité est immédiatement consécutive à la détection de cette activité et dans lequel le mélange de premières données audio et de ces deuxièmes données audio est immédiatement consécutif à la génération de ces deuxièmes données audio. Ainsi, le mélange des premières données audio et des deuxièmes données audio générées à partir des activités détectées en fonction de données mesurées est réalisé dès que les données mesurées sont captées. Ce mode de réalisation permet à un utilisateur de recevoir en direct des données audio ainsi enrichie des données d'activité.

Typiquement, pour le flux audio d'une visioconférence, une latence (i.e. le temps de transmission entre la source et la destination) inférieure à 100 millisecondes est requise ; au-delà de cette contrainte de temps, le délai de transmission des données audio peut-être perceptible par des utilisateurs distants lors d'une conversation et ainsi dégrader l'expérience des utilisateurs. Par exemple, il est avantageux que le procédé selon ce mode de réalisation, lorsqu'une activité est détectée, génère les deuxièmes données audio associées à cette activité et les combine avec les premières données audio sans augmenter de manière significative la latence. De cette manière, des utilisateurs distants peuvent converser sans percevoir aucun délai tout en ayant accès en direct à un contenu audio enrichi et donc une meilleure compréhension d'une réunion.

Au cours d'une étape S60, le dispositif APP fournit les données audio mélangées OUT_AUDIO.

En particulier, les données audio mélangées OUT_AUDIO sont, selon une variante de réalisation, transmises à destination d'un ou plusieurs dispositifs de restitution PC, tels que des terminaux comprenant des haut-parleurs ou configurés pour commander des haut-parleurs. Conformément à l'invention, les dispositifs de restitution PC peuvent désigner tout type de terminaux tels que des ordinateurs portables ou fixes, des téléphones mobiles, des Smartphones, des tablettes, des projecteurs, etc. De tels dispositifs de restitution sont capables de convertir des données audio en un signal acoustique. Il s'agit en particulier de dispositifs de restitution PC locaux ou distants.

Selon un mode de réalisation, les données audio mélangées OUT_AUDIO sont transmises à des dispositifs de restitution locaux PC (i.e. sur un même réseau local que le dispositif APP). Par exemple, en reprenant l'exemple de la figure 1, un utilisateur d'un dispositif de restitution PC recevant les données audio mélangées OUT_AUDIO peut être une des personnes PERS_A ou PERS_B dans la salle de réunion ROOM_A, personnes pour lesquelles une activité ACT peut être détectée et décrite par les deuxièmes données audio SYN_AUDIO dans les données audio mélangées OUT_AUDIO.

Selon un autre mode de réalisation, les données audio mélangées OUT_AUDIO sont transmises à des dispositifs de restitution PC distants. En reprenant l'exemple de la figure 1, l'utilisateur U1 d'un dispositif de restitution PC recevant les données audio mélangées OUT_AUDIO peut être distant dans une salle de réunion ROOM_B. Dans ce mode de réalisation, les données audio mélangées OUT_AUDIO sont fournies à un dispositif de transmission COM pour transmission sur un réseau de communication (e.g. téléphonie, visiophonie, diffusion, Internet, etc.) en vue d'être restituées par des dispositifs de restitution PC distants.

Toutefois, dans le cadre de l'invention, d'autres variantes de réalisation sont également possibles. Par exemple, il pourrait être envisagé de fournir les données audio mélangées OUT_AUDIO à un ou plusieurs dispositifs de stockage pour mémorisation, ce qui permettrait d'accéder ultérieurement au contenu audio enrichi.

Bien évidemment, aucune limitation n'est attachée au format d'encodage des données audio, qui peuvent être encodées avec tout protocole connu de l'homme du métier. De même, aucune limitation n'est attachée à la nature des interfaces de communication entre le dispositif APP proposé et respectivement : les dispositifs MIC d'acquisition de données audio ; les capteurs SENS ; et les dispositifs de restitution PC, qui peuvent être filaire ou non filaire, et peuvent mettre en oeuvre tout protocole connu de l'homme du métier (Ethernet, « Wi-Fi » (marque déposée), « Bluetooth » (marque déposée), 3G, 4G, 5G, 6G, etc.).

Le procédé proposé trouve une application particulièrement avantageuse pour la mise en oeuvre de systèmes de visioconférence. Grâce à la combinaison des données audio d'activités aux données audio de base, le procédé proposé permet de restituer par la modalité audio les activités liées à une visioconférence. À titre d'exemple, le procédé proposé permet entre autres de suivre une réunion à distance uniquement en audio tout en ayant accès aux informations concernant le déroulement de la réunion. En comparaison aux systèmes de visioconférence existants, un utilisateur distant entend non seulement les voix et sons captés dans une salle de réunion mais accède en outre aux données audio d'activités . Le procédé proposé permet ainsi d'améliorer la restitution d'une réunion ou d'une présentation lors d'une visioconférence et, ainsi, d'améliorer l'expérience des utilisateurs d'un système de visioconférence.

Il convient de souligner que le procédé proposé permet d'améliorer significativement l'accessibilité numérique aux services de visioconférence. Effectivement, le procédé proposé permet par exemple aux personnes en situation de déficience visuelle d'accéder à un contenu audio enrichi lors d'une visioconférence, et ainsi d'avoir une meilleure compréhension du déroulement d'une réunion.

La **figure 3** représente schématiquement un exemple de données obtenues et traitées par un système de transmission de données audio selon un mode de réalisation de l'invention.

La figure 3 illustre des données traitées par le dispositif APP dont notamment les suivantes : des premières données audio IN_AUDIO (e.g. des sons captés par un microphone MIC d'une salle de réunion ROOM_A) ; des données mesurées IN_DATA (e.g. des données d'un capteur de pression SENS installé sur une porte d'une salle ROOM_A) ; une activité détectée ACT1 (e.g. l'entrée d'une personne dans la salle ROOM_A, un lancement de diaporama) détectée à l'instant T1 ; des deuxièmes données audio SYN_AUDIO (e.g. une icône sonore pour annoncer l'entrée d'une personne) ; et des données audio mélangées OUT_AUDIO (e.g. un canal audio enrichi combinant les sons captés IN_AUDIO et l'icône sonore SYN_AUDIO).

Tel qu'illustré par la figure 3, selon un mode de réalisation, le dispositif APP mélange de manière synchrone les premières données audio IN_AUDIO et les deuxièmes données audio SYN_AUDIO.

Nous faisons ici référence par le terme « mélange synchrone » au fait que : pour une activité détectée à un instant donné, les premières et deuxièmes données audio sont synchronisées de telle sorte que le début des deuxièmes données audio associées à cette activité coïncide avec les premières données audio captées à l'instant de détection de cette activité. Autrement dit, le mélange synchrone est réalisé de telle sorte que, dans le flux audio de sortie, le début des deuxièmes données audio d'une activité correspond à l'instant de détection de l'activité

Pour décrire le caractère synchrone du mélange réalisé par le dispositif APP, nous considérons l'exemple suivant. À l'étape S30, le dispositif APP détecte, à partir de données mesurées IN_DATA, une activité ACT1. Cette activité ACT1 est caractérisée par un attribut de description et un instant de détection T1. À l'étape S40, le dispositif APP génère des deuxièmes données audio SYN_AUDIO représentatives de l'activité ACT1. À l'étape S50, le dispositif APP mélange (i.e. combine) les premières données audio IN_AUDIO et les deuxièmes données audio SYN_AUDIO pour obtenir un canal audio de sortie OUT_AUDIO. Le mélange est dit synchrone lorsque, dans le canal audio de sortie OUT_AUDIO, l'instant T1 dans les premières données audio IN_AUDIO coïncide avec le début des deuxièmes données audio SYN_AUDIO.

Autrement dit, le dispositif APP synchronise lors du mélange : le début des deuxièmes données audio SYN_AUDIO associées à l'activité ACT1 détectée à l'instant T1 ; avec l'instant T1 dans les premières données audio IN_AUDIO.

Les **figures 4A à 4D** représentent schématiquement un système de fourniture de données audio selon des modes de réalisation de l'invention, ces modes de réalisations pouvant être combinés.

Selon un premier mode de réalisation, illustré par la figure 4A, le dispositif APP : prend en entrée les premières données audio IN_AUDIO et les données mesurées IN_DATA ; et fournit en sortie les données audio mélangées OUT_AUDIO enrichies avec les deuxièmes données audio SYN_AUDIO.

Dans ce mode de réalisation, les données audio enrichies OUT_AUDIO comprennent un seul canal audio, par exemple un canal audio combinant les voix des personnes participant à une réunion avec les données audio d'activités. Les données audio enrichies OUT_AUDIO sont, selon ce mode de réalisation, fournies à un dispositif de restitution PC qui restitue le canal audio OUT_AUDIO au moyen d'un haut-parleur SPK.

Selon un deuxième mode de réalisation, illustré par la figure 4B, le dispositif APP est paramétré par des paramètres utilisateurs CNF_U1 et CNF_U2 respectivement associés aux utilisateurs des dispositifs de restitution PC_U1 et PC_U2. Autrement dit, les données audio enrichies OUT_AUDIO sont obtenues en fonction des paramètres utilisateurs CNF_U1 et CNF_U2.

Dans le contexte de l'invention, un paramètre utilisateur désigne un paramètre d'entrée du procédé proposé de telle sorte que les données audio enrichies sont obtenues en fonction de ce paramètre. Par exemple, un paramètre utilisateur peut notamment désigner : un type d'activités à décrire par la modalité audio (e.g. activités de personnes, ou activités de lieux, ou les deux) ; un type de description des activités (e.g. description détaillée, ou description simplifiée ; icônes sonores, ou voix de synthèse) ; des préférences de langage (e.g. formel, ou familier) ; une langue (e.g. français ou anglais) ; un type de profil d'un utilisateur ; un niveau de confidentialité ; des préférences utilisateur ; etc.

Il est important de noter ici qu'un paramètre utilisateur peut être préalablement défini ou défini au cours d'une restitution. En outre, un paramètre utilisateur peut être défini par l'utilisateur ou par un administrateur.

En reprenant l'exemple décrit en référence à la figure 2, les données audio d'activités SYN_AUDIO comprennent un message audio en voix de synthèse annonçant l'entrée d'une personne. Nous supposons par exemple que les paramètres utilisateur CNF_U1 et CNF_U2 caractérisent deux niveaux de confidentialité différents. Pour le premier paramètre utilisateur CNF_U1, le message audio en voix de synthèse annonce : « Madame X est entrée dans la salle de réunion. » ; tandis que, pour le deuxième paramètre CNF_U2, le message audio en voix de synthèse annonce : « Une personne est entrée dans la salle de réunion. ».

Dans ce mode de réalisation, les données audio enrichies OUT_AUDIO fournies par le dispositif APP comprennent une pluralité de canaux audio OUT_AUDIO_U1 et OUT_AUDIO_U2. Plus précisément, le dispositif APP réalise, pour chacun des paramètres utilisateur CNF_U1 et CNF_U2, des étapes de génération et de mélange de sorte à obtenir une pluralité de canaux audio OUT_AUDIO_U1 et OUT_AUDIO_U2. Dans ce mode de réalisation, pour une activité ACT détectée, l'étape de génération de deuxièmes données audio SYN_AUDIO est différente en fonction du paramètre utilisateur CNF_U1 ou CNF_U2.

Ainsi, par exemple, le premier canal audio OUT_AUDIO_U1 comprend le message audio avec l'identité de la personne et le deuxième canal audio OUT_AUDIO_U2 comprend le message audio anonyme. Les canaux audio enrichies OUT_AUDIO_U1 et OUT_AUDIO_U2 sont transmis aux dispositifs de restitution PC_U1 et PC_U2 équipés chacun d'un haut-parleur respectivement SPK_U1 et SPK_U2. De cette manière, les utilisateurs des dispositifs PC_U1 et PC_U2 ont respectivement accès à des niveaux d'informations différents.

Ce mode de réalisation permet de fournir un contenu audio avec différents niveaux de confidentialité. Par exemple, un premier canal audio enrichi avec des données d'activités comprenant les noms des personnes est fourni à un premier groupe de personnes (e.g. les employés d'une société) ; et un deuxième canal audio enrichi avec des données d'activités anonymes est fourni à un deuxième groupe de personnes (e.g. des personnes externes à la société).

Selon un autre exemple, les paramètres utilisateurs CNF_U1 et CNF_U2 peuvent également caractériser différents types de description des activités. À titre illustratif, nous supposons ici que les paramètres utilisateurs CNF_U1 et CNF_U2 caractérisent respectivement un niveau simplifié et un niveau détaillé de description des activités ACT détectées. Ainsi, suite au lancement d'un diaporama, les deuxièmes données audio SYN_AUDIO peuvent par exemple comprendre : pour le premier paramètre utilisateur CNF_U1 (i.e. description simplifiée), un message audio annonçant : « Une présentation commence » ; et, pour le deuxième paramètre CNF_U2 (i.e. description détaillée), un message audio annonçant : « Une présentation, intitulée : Sur l'évolution des réseaux de téléphonie mobile, commence et est présentée par Monsieur Y ».

Ce mode de réalisation permet d'adapter le contenu audio transmis en fonction des utilisateurs. Cela permet notamment de fournir différentes versions d'un contenu audio associé à une réunion. Tel qu'illustré par les exemples décrits ici, ce mode de réalisation permet notamment de fournir une pluralité de canaux audio avec différents types d'enrichissement.

Dans le contexte de l'invention, une «version d'un contenu audio » peut par exemple désigner : un canal audio avec uniquement les données audio de base ; ou un canal audio combinant les données audio de base et les données audio d'activités. Également, des versions différentes d'un contenu audio peuvent désigner des canaux audio combinant les données audio de base avec des données audio d'activités respectivement obtenues en fonction de différents paramètres utilisateur.

Il convient de noter que le paramétrage du dispositif APP tel que décrit ici peut être réalisé au cours de l'étape de génération S40 des deuxièmes données audio SYN_AUDIO et/ou au cours de l'étape de mélange S50.

En outre, pour un utilisateur distant donné, la sélection du canal audio peut être réalisée soit en amont du transport des données audio (i.e. par le dispositif mettant en oeuvre le procédé proposé), soit en aval (i.e. par le dispositif de restitution) tel que décrit ci-après.

Selon un troisième mode de réalisation, illustré par la figure 4C, le dispositif APP est paramétré par des paramètres utilisateurs CNF_U1 et CNF_U2.

Nous supposons ici, à titre d'exemple, que les paramètres utilisateur CNF_U1 et CNF_U2 caractérisent deux langues : le français ; et l'anglais. De plus, le dispositif APP détecte l'entrée d'une personne dans une salle de réunion. Ainsi, le dispositif APP génère, en fonction des paramètres utilisateur CNF_U1 et CNF_U2, des données audio d'activités SYN_AUDIO annonçant l'entrée d'une personne. Pour le premier paramètre CNF_U1, les données audio d'activités SYN_AUDIO comprennent un message audio en voix de synthèse annonçant en français : « Une personne est entrée dans la salle de réunion. ». Pour le deuxième paramètre CNF_U2, les deuxièmes données audio SYN_AUDIO comprennent un message audio en voix de synthèse annonçant en anglais : « Someone entered the meeting room. ».

Dans ce mode de réalisation, le dispositif APP fournit en sortie des données audio enrichies comprenant une pluralité de canaux audio OUT_AUDIO_U2 et OUT_AUDIO_U1 : un canal audio avec des données d'activités en français ; et un canal audio avec des données d'activités en anglais. Les canaux audio OUT_AUDIO_U1 et OUT_AUDIO_U2 sont fournis à un même dispositif de restitution PC. De cette manière, l'utilisateur du dispositif PC peut ainsi sélectionner le canal audio qu'il souhaite restituer. Par exemple, l'utilisateur du dispositif PC sélectionne le canal audio français et accède ainsi au message audio : « Une personne est entrée dans la pièce. ».

Ce mode de réalisation permet ainsi aux destinataires de choisir le type d'enrichissement auquel ils souhaitent accéder.

Selon un quatrième mode de réalisation, illustré par la figure 4D, le dispositif APP fournit en sortie un canal audio avec des premières données audio IN_AUDIO et au moins un canal audio avec des deuxièmes données audio SYN_AUDIO_1, SYN_AUDIO_2. Chacun des canaux audio SYN_AUDIO_1, SYN_AUDIO_2 avec des données d'activités peut comprendre des deuxièmes données audio respectivement obtenues en fonction de paramètres utilisateurs différents. Par exemple, les canaux audio SYN_AUDIO_1, SYN_AUDIO_2 peuvent comprendre des données audio d'activités respectivement représentatives de différents types d'activités.

Dans ce mode de réalisation, les canaux audio fournies par le dispositif APP sont, par exemple, transmis à un ou plusieurs dispositifs de restitution PC. De cette manière, un dispositif de restitution PC peut, au cours d'une réunion, sélectionner au moins un canal audio à restituer et potentiellement en mélanger plusieurs. Il convient de noter que, dans ce mode de réalisation, l'étape de mélange S50 des premières données audio IN_AUDIO et des deuxièmes données audio SYN_AUDIO_1, SYN_AUDIO_2 peut ainsi être réalisée par le dispositif de restitution PC.

Par exemple, le dispositif APP peut fournir en sortie les canaux audio suivants : un canal IN_AUDIO avec les données audio de base ; un canal SYN_AUDIO_1 avec des données audio d'activités d'un premier type (e.g. des activités de personnes) ; et un canal SYN_AUDIO_2 des données audio d'activités d'un second type (e.g. des activités de lieu). Les canaux audio IN_AUDIO, SYN_AUDIO_U1, et SYN_AUDIO_2 sont fournis à des dispositifs de restitution PC. Ainsi, un utilisateur d'un dispositif de restitution PC peut sélectionner le ou les canaux audio qu'il souhaite restituer. Par exemple, l'utilisateur du dispositif PC peut sélectionner uniquement le canal audio IN_AUDIO, ou combiner les canaux IN_AUDIO et SYN_AUDIO_1, ou combiner les canaux IN_AUDIO et SYN_AUDIO_2, ou tout autre combinaison de ces canaux.

Ce mode de réalisation permet à un utilisateur d'un dispositif de restitution de sélectionner le contenu audio auquel il souhaite accéder, e.g. un contenu audio enrichi ou non, un contenu audio enrichi avec un certain type d'activités, etc. Notamment, au cours d'une réunion, un utilisateur peut ainsi faire varier le contenu audio restitué.

Par exemple, les données audio fournies à un dispositif de restitution peuvent comprendre deux canaux audio : un premier comprenant uniquement les données audio de base (e.g. les sons captés dans une salle de réunion) ; et un deuxième canal audio comprenant les données audio d'activités. Nous supposons qu'un utilisateur distant assiste à une réunion en visioconférence en suivant le flux vidéo de la réunion et en écoutant le premier canal audio avec uniquement les données audio de base. Si cet utilisateur distant souhaite consulter temporairement un autre document pour valider une information, il peut alors combiner les deux canaux avec les données audio de base et les données audio d'activités. De cette manière, l'utilisateur distant peut se détourner quelques instants des images de la réunion en cours, sans pour autant perdre les informations importantes concernant le déroulement de la réunion.

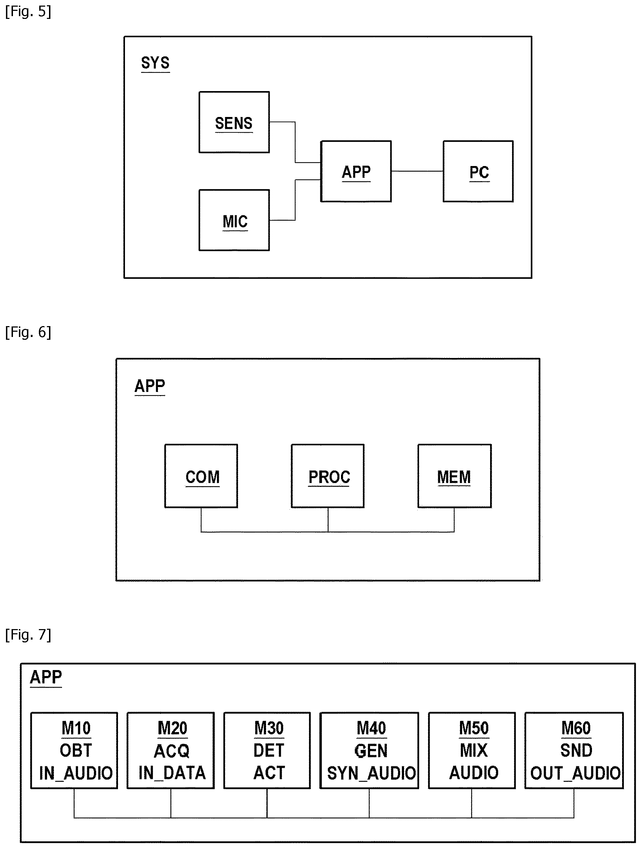

La **figure 5** représente schématiquement un système de fourniture de données audio selon un mode de réalisation de l'invention.

Tel qu'illustré par la figure 5, selon un mode de réalisation, le système SYS comprend au moins un des éléments suivants : un dispositif APP de fourniture de données audio ; au moins un capteur SENS configuré pour capturer des données mesurées IN_DATA et pour communiquer avec le dispositif APP ; au moins un dispositif d'acquisition MIC configuré pour capter des premières données audio IN_AUDIO et pour communiquer avec le dispositif APP ; et au moins un dispositif de restitution PC configuré pour communiquer avec le dispositif APP et pour restituer des données audio OUT_AUDIO.

La **figure 6** représente schématiquement un exemple d'architecture logicielle et matérielle d'un dispositif de fourniture de données audio selon un mode de réalisation de l'invention.

Tel qu'illustré par la figure 6, selon un mode de réalisation, le dispositif APP de fourniture de données audio dispose de l'architecture matérielle d'un ordinateur. Le dispositif APP comporte, selon un exemple de réalisation, un processeur PROC, une mémoire vive, une mémoire morte MEM, et une mémoire non volatile. La mémoire MEM constitue un support d'informations (i.e. un support d'enregistrement) conforme à l'invention, lisible par ordinateur et sur lequel est enregistré un programme d'ordinateur PROG. Le programme d'ordinateur PROG comporte des instructions pour la mise en oeuvre des étapes réalisées par le dispositif APP d'un procédé selon l'invention, lorsque le programme d'ordinateur PROG est exécuté par le processeur PROC. Le programme d'ordinateur PROG définit les éléments fonctionnels représentés ci-après par la figure 7, qui s'appuient sur ou commandent les éléments matériels du dispositif APP.

Tel qu'illustré par la figure 6, selon un mode de réalisation, le dispositif APP dispose d'un dispositif de communication COM configuré pour communiquer avec au moins un des éléments suivants : au moins un capteur SENS ; au moins un dispositif d'acquisition de données audio MIC ; et au moins un dispositif de restitution PC.

La **figure 7** représente schématiquement un exemple d'architecture fonctionnelle d'un dispositif de fourniture de données audio selon un mode de réalisation de l'invention.

Tel qu'illustré par la figure 7, selon un mode de réalisation, le dispositif APP de fourniture de données audio comprend au moins un des éléments suivants :
- un obtenteur M10 configuré pour obtenir des premières données audio IN_AUDIO ;
- un récepteur M20 configuré pour recevoir des données mesurées IN_DATA par un ou plusieurs capteurs SENS ;
- un détecteur M30 configuré pour détecter des activités ACT à partir des données mesurées IN_DATA ;
- un générateur M40 configuré pour générer des deuxièmes données audio SYN_AUDIO représentatives des activités ACT détectées ;
- un mélangeur M50 configuré pour mélanger les premières données audio IN_AUDIO et les deuxièmes données audio SYN_AUDIO et produire ainsi des données mélangées OUT_AUDIO ; et
- un fournisseur M60 configuré pour fournir les données audio mélangées OUT_AUDIO.

Nous présentons ci-dessous différents exemples d'usage du dispositif proposé de fourniture de données audio, ces exemples étant décrits à titre illustratif et étant dépourvus de tout caractère limitatif.

Selon un premier exemple d'usage, un utilisateur U1 participe à une réunion à distance avec des personnes PERS_A et PERS_B présentes dans une salle de réunion ROOM_A. L'utilisateur reçoit des données audio mélangées OUT_AUDIO fournies par le dispositif APP proposé. Grâce aux premières données audio IN_AUDIO, l'utilisateur U1 peut suivre par téléphone tout ce qui se dit durant la réunion par les différentes personnes PERS_A et PERS_B. Et, grâce aux deuxièmes données audio SYN_AUDIO représentatives des activités ACT détectées, l'utilisateur U1 prend conscience des entrées de personnes, de lancement de diaporama, de démarrage ou fin d'activités diverses, ce qui lui permet de mieux comprendre et de mieux situer les propos qu'il entend des personnes PERS_A et PERS_B et certains bruits.

Selon un deuxième exemple d'usage, un utilisateur U1 n'a pas pu assister à une réunion d'avancement du projet auquel cet utilisateur U1 participe. L'utilisateur décide d'accéder à l'enregistrement audio de la réunion qui a été réalisé et accède ainsi aux données audio mélangées OUT_AUDIO fournies par le dispositif APP proposé. Par le biais de cet enregistrement audio, l'utilisateur U1 revit la réunion comme s'il y avait assisté en sachant qui est arrivé, quand, que certains échanges vocaux correspondaient à la présentation d'un diaporama, mais qu'ensuite, il s'agissait d'échanges hors présentation.

Selon un troisième exemple d'usage, deux utilisateurs U1 et U2 assistent à une même présentation d'une société A. L'utilisateur U1 est un employé de la société A, ce qui n'est pas le cas de l'utilisateur U2. Les deux utilisateurs U1 et U2 accèdent en direct à des données audio mélangées OUT_AUDIO fournies par le dispositif APP, comprenant les données audio de base IN_AUDIO de la réunion enrichies par les données audio d'activités SYN_AUDIO. Cependant, les utilisateurs U1 et U2 n'ont pas accès au même niveau de précision. En effet, dans cet exemple, plusieurs versions des données audio d'activités SYN_AUDIO sont transmises et filtrées en réception en fonction des paramètres utilisateur CNF_U1 et CNF_U2 (e.g. profil, droits) des utilisateurs U1 et U2.

Selon un auatrième exemple d'usage, un utilisateur U1 est en train de suivre une réunion à distance. L'utilisateur U1 dispose d'un casque audio SPK connecté à un terminal PC qui lui permet d'écouter tout ce qui se dit durant la réunion et voit sur un écran du terminal PC la retransmission en images de la salle de réunion ROOM_A. À un instant, l'utilisateur U1 veut vérifier le contenu en images d'une autre vidéo indépendante pour valider son argumentaire quand il va devoir parler. Aussi, l'utilisateur U1 décide d'activer le son « ambiance audio » en enrichissement de l'audio captée IN_AUDIO par les micros MIC dans la salle de réunion ROOM_A. L'utilisateur U1 a ainsi maintenant dans son casque audio SPK le mélange des données audio de base IN_AUDIO et des données audio d'activités SYN_AUDIO fournies par le dispositif APP proposé. Cela lui permet de se détourner quelques instants des images de la réunion en cours, sans pour autant perdre les informations importantes des activités ACT non perçues par l'audio de base IN_AUDIO.

Il est à noter que l'ordre dans lequel s'enchaînent les étapes d'un procédé tel que décrit précédemment, notamment en référence aux dessins ci-joints, ne constitue qu'un exemple de réalisation dépourvu de tout caractère limitatif, des variantes étant possibles. Par ailleurs, les signes de référence ne sont pas limitatifs de l'étendue de la protection, leur unique fonction étant de facilité la compréhension des revendications.

Un homme du métier comprendra que les modes de réalisation et variantes décrits ci-dessus ne constituent que des exemples non limitatifs de mise en oeuvre de l'invention. En particulier, l'homme du métier pourra envisager une quelconque adaptation ou combinaison des modes de réalisation et variantes décrits ci-dessus afin de répondre à un besoin bien particulier.

## Revendications

1. Procédé de fourniture de données audio, ledit procédé comprenant une génération audio (S40), la génération audio (S40) créant des deuxièmes données audio (SYN_AUDIO) représentatives d'au moins une activité (ACT) détectée, ladite au moins une activité (ACT) étant détectée en fonction de données mesurées (IN_DATA) par au moins un capteur non-audio (SENS), lesdites deuxièmes données audio générées (SYN_AUDIO) étant aptes à être mélangées avec des premières données audio captées (IN_AUDIO).

2. Procédé selon la revendication 1 comprenant une capture (S20) desdites données mesurées (IN_DATA) par ledit au moins un capteur (SENS) en fonction desquelles ladite au moins une activité (ACT) est détectée (S30).

3. Procédé selon la revendication 1 ou 2 dans lequel lesdites deuxièmes données audio (SYN_AUDIO) comprennent au moins un message audio en voix de synthèse.

4. Procédé selon l'une des revendications 1 à 3 comprenant un mélange (S50) desdites premières (IN_AUDIO) et deuxièmes données audio (SYN_AUDIO).

5. Procédé selon la revendication 4 dans lequel ledit mélange (S50) desdites premières (IN_AUDIO) et deuxièmes données audio (SYN_AUDIO) est réalisé de manière synchrone.

6. Procédé selon la revendication 4 ou 5 dans lequel ladite génération (S40) de dites deuxièmes données audio (SYN_AUDIO) représentatives d'une dite activité (ACT) est immédiatement consécutive à la détection (S30) de cette activité (ACT) et dans lequel ledit mélange (S50) de dites premières données audio (IN_AUDIO) et de ces deuxièmes données audio (SYN_AUDIO) est immédiatement consécutif à ladite génération (S40) de ces deuxièmes données audio (SYN_AUDIO).

7. Procédé selon l'une des revendications 4 à 6 dans lequel les données audio mélangées (OUT_AUDIO) comprennent plusieurs canaux audio (OUT_AUDIO_U1, OUT_AUDIO_U2).

8. Procédé selon l'une des revendications 4 à 7 dans lequel la génération (S40) desdites deuxièmes données audio (SYN_AUDIO) est réalisée en fonction d'au moins un paramètre utilisateur (CNF_U1) d'un utilisateur (U1) d'un dispositif de restitution (PC) destinataire des données audio mélangées (OUT_AUDIO).

9. Procédé selon les revendications 7 et 8 dans lequel lesdits plusieurs canaux audio (OUT_AUDIO_U1, OUT_AUDIO_U2) sont respectivement obtenus à partir de différents paramètres utilisateur (CNF_U1, CNF_U2).

10. Procédé selon l'une des revendications 1 à 9 comprenant une identification d'au moins une personne (PERS_A, PERS_B) associée à ladite au moins une activité (ACT) détectée, lesdites deuxièmes données audio (SYN_AUDIO) étant générées (S40) en fonction du résultat de l'identification.

11. Dispositif (APP) de fourniture de données audio, ledit dispositif (APP) comprenant un générateur audio (M40), le générateur audio (M40) créant des deuxièmes données audio (SYN_AUDIO) représentatives d'au moins une activité (ACT) détectée, ladite au moins une activité (ACT) étant détectée en fonction de données mesurées (IN_DATA) par au moins un capteur non-audio (SENS), lesdites deuxièmes données audio générées (SYN_AUDIO) étant aptes à être mélangées avec des premières données audio captées (IN_AUDIO).

12. Système (SYS) comprenant :
- un dispositif (APP) de fourniture de données audio selon la revendication 11 ;
- au moins un dispositif (MIC) d'acquisition configuré pour capter des premières données audio (IN_AUDIO) et pour communiquer avec ledit dispositif (APP) de fourniture de données audio ; et
- au moins un capteur (SENS) configuré pour capturer des données mesurées (IN_DATA) et pour communiquer avec ledit dispositif (APP) de fourniture de données audio.

13. Système (SYS) selon la revendication 12 comprenant au moins un dispositif de restitution (PC) configuré pour communiquer avec ledit dispositif (APP) de fourniture de données audio et pour restituer des données audio (OUT_AUDIO).

14. Système (SYS) selon la revendication 12 ou 13 dans lequel ledit au moins un capteur (SENS) est un capteur parmi les suivants : une caméra ; une sonde réseau ; un capteur de pression ; un capteur de température ; un capteur de profondeur ; et une caméra thermique.

15. Système (SYS) selon l'une des revendications 12 à 14 **caractérisé en ce que** ledit système (SYS) est un système de visioconférence.

16. Programme d'ordinateur comprenant des instructions pour la mise en oeuvre des étapes d'un procédé selon l'une des revendications 1 à 10, lorsque ledit programme d'ordinateur est exécuté par au moins un processeur (PROC).

17. Support d'informations (MEM) lisible par ordinateur comprenant un programme d'ordinateur selon la revendication 16.
